# EUROPÄISCHE PATENTSCHRIFT

(11) **EP 0 545 437 B1**
(45) Veröffentlichungstag und Bekanntmachung des Hinweises auf die Patenterteilung: **11.02.1998**
(21) Anmeldenummer: 92120751.0
(22) Anmeldetag: 04.12.1992
(51) Int. Cl.: B60Q 1/52

(54) **Verfahren zum Vermeiden von Kollisionen von Kraftfahrzeugen**
System for avoiding collision between vehicles
Méthode pour éviter les collisions entre véhicules

(30) Priorität: 06.12.1991 DE 4140327
(43) Veröffentlichungstag der Anmeldung: 09.06.1993
(73) Patentinhaber: Bayerische Motoren Werke Aktiengesellschaft, 80788 München (DE)
(72) Erfinder: Jost, Michael, W-8084 Haimhausen (DE); Waffler, Andreas, W-8014 Neubiberg (DE); Siegl, Winfried, W-8432 Beilngries (DE); Weishaupt, Walter, W-8000 München 60 (DE)

(56) Entgegenhaltungen:
- EP-A- 0 208 610
- DE-A- 4 201 970
- DE-U- 8 816 153
- US-A- 3 689 882
- US-A- 3 898 652

## Beschreibung

Die Erfindung bezieht sich auf ein Verfahren zum Vermeiden von Kollisionen von Kraftfahrzeugen mit den Merkmalen des Oberbegriffs von Patentanspruch 1.

Ein derartiges Verfahren ist aus der DE-A-3 304 620 und der DE-A-42 01 970 bekannt. Dabei sind die Sicherheitszonen in ihrem Abstand durch den Fahrer nicht beeinflußbar. Er hat damit keine Möglichkeit, einem erhöhten Sicherheitsbedürfnis Rechnung zu tragen.

Der Erfindung liegt die Aufgabe zugrunde, ein Verfahren der eingangs genannten Art zu schaffen, das es dem Fahrer ermöglicht, seinem Sicherheitsbedürfnis Rechnung zu tragen.

Die Erfindung löst diese Aufgabe durch die Merkmale des Patentanspruchs 1.

Der Fahrer kann einem erhöhten Sicherheitsbedürfnis beispielsweise dadurch Rechnung tragen, daß der Abstand der Signalisierungszone vom Kraftfahrzeug durch ihn selbst vergrößert wird. Umgekehrt kann der Abstand durch den Fahrer auch verringert werden, wenn er auf die Auslösung der Signalisierungsmaßnahme weitgehend verzichten möchte.

Der Abstand der Signalisierungszone kann, wie an sich bekannt, entsprechend der Geschwindigkeit des Kraftfahrzeugs variabel sein. Bei großer Geschwindigkeit ist der Abstand selbstverständlich größer als bei kleiner Geschwindigkeit des Kraftfahrzeugs, da dann auch die Kollisionsgefahr entsprechend größer bzw. kleiner ist. Die willkürliche Einflußnahme des Fahrers kann beispielsweise in der Weise vonstatten gehen, daß der Abstand der Signalisierungszone über den bekannten Zusammenhang v/2 einstellbar ist. Das bedeutet, daß die halbe Geschwindigkeit des Kraftfahrzeugs in Metern dann den Abstand der Signalisierungszone bestimmt. Bei einer Geschwindigkeit von 100 km/h ergibt sich damit ein Abstand der Signalisierungszone von 50m.

Es Zeigt
- Fig. 1: anhand verschiedener schematisch dargestellter Abstandszonen die prinzipielle Arbeitsweise des erfindungsgemäßen Verfahrens und
- Fig. 2: die Arbeitsweise des Verfahrens bei verschieden vorgegebenen Signalisierungszonen im Verhältnis zu selbsttätig sich einstellenden Sicherheitszonen.

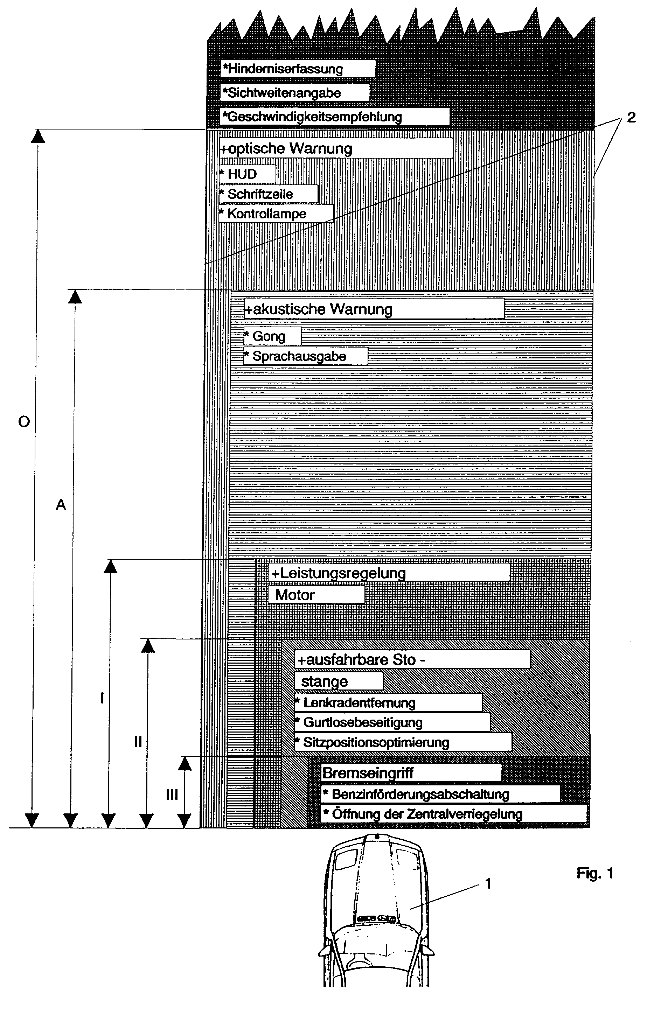

Das in Fig. 1 schematisch dargestellte Kraftfahrzeug 1 ist mit einer nicht gezeigten Abstandsmeßvorrichtung sowie einer zugehörigen Auswertevorrichtung versehen. Der Fahrkorridor 2, d. h. der vor dem Kraftfahrzeug 1 lieTeil der Fahrbahn ist in drei Sicherheitszonen eingeteilt, die mit I, II und III bezeichnet sind. Ferner befinden sich zwei Signalisierungszonen A und O im Abstand vor dem Kraftfahrzeug 1.

Der mit zwei parallelen, in Fahrtrichtung verlaufenden Linien begrenzte Fahrkorridor 2 wird durch die beispielsweise auf Laserbasis arbeitende Abstandsmeßvorrichtung überwacht und ein eindringendes Hindernis darin erkannt. Sofern das Hindernis den Abstand der Signalisierungszone O unterschreitet erfolgt eine optische Warnung, beispielsweise durch Aufleuchten einer Kontrollampe oder eines Schriftzugs im Blickfeld des Fahrers. Verringert sich der Abstand des Hindernisses weiter, so wird bei Unterschreiten des für die Signalisierungszone A maßgeblichen Abstands eine akustische Warnung, beispielsweise ein Gong oder eine Sprachinformation ausgelöst. Diese Warnung kann wiederholt werden, wenn sich der Abstand des Hindernisses weiter verringert.

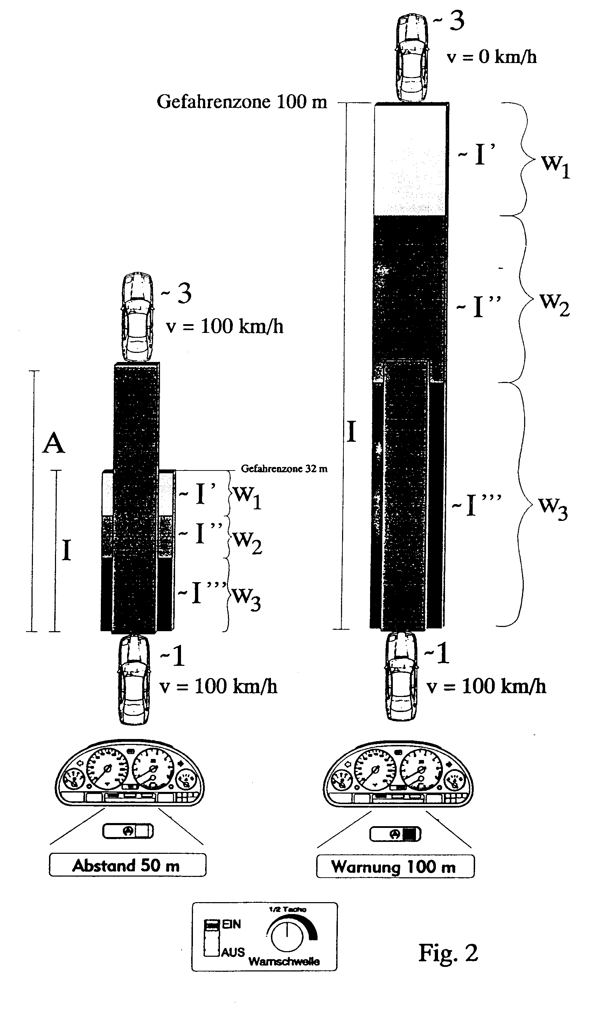

Verringert sich der Abstand des Hindernisses weiter und unterschreitet den für die Sicherheitszone I maßgeblichen Wert, so wird eine Soll-Maßnahme ausgelöst, die von der Größe der Kollisionsgefahr abhängig ist. Es handelt sich dabei beispielsweise um eine Leistungsregelung des Antriebsmotors des Kraftfahrzeugs, die in den Schritten Rückstellen des Fahrwunsch-Gebers in die Ausgangslage leistungsreduzierender Motoreingriff und nachfolgender Bremseneingriff vorgenommen wird. Hierzu ist die Sicherheitszone I in drei Bereiche I' bis I''' eingeteilt (siehe Fig. 2).

In der Sicherheitszone II ist die Kollisionsgefahr besonders groß. Die Soll-Maßnahmen entsprechen der Gefahrensituation und bestehen beispielsweise darin, einen ausfahrbaren Stoßfänger zu aktivieren, das Lenkrad in eine das Verletzungsrisiko minimierende Stellung zu fahren oder weitere Maßnahmen zu ergreifen, die im Falle eines Unfalls die Unfallfolgen für Fahrer und Kraftfahrzeug verringern.

In der Sicherheitszone III ist ein Unfall nach physikalischen Gesetzmäßigkeiten unvermeidlich. Die Soll-Maßnahmen sind lediglich dazu da, den Schaden zu begrenzen. Hierzu gehören Maßnahmen zur Fahrzeugstabilisierung ebenso wie Maßnahmen zur Schadensbegrenzung. Letzteres kann beispielsweise durch das selbsttätige Abstellen der Kraftstofförderung, das Öffnen der Zentralverriegelung sowie die Unterbrechung der Verbindung zwischen der Bordnetzbatterie und dem übrigen Bordnetz bestehen.

Die Sicherheitszonen I bis III sind in ihrem Abstand durch den Fahrzeugbenutzer nicht beeinflußbar. Sie können in ihrer Ausdehnung aber dynamisch sein und abhängen von der Eigengeschwindigkeit des Kraftfahrzeugs bzw. der Differenzgeschwindigkeit zwischen dem Kraftfahrzeug und dem Hindernis.

Die beschriebenen Soll-Maßnahmen können unmittelbar bei Unterschreiten des für die jeweilige Sicherheitszone maßgeblichen Abstands ausgelöst werden. Es ist aber auch möglich, hiermit noch für eine Reaktionszeit zu warten, innerhalb der der Fahrer selbst diese Maßnahme auslösen kann. Nur dann, wenn er dies nicht tut, wird die Soll-Maßnahme selbsttätig ausgelöst. Selbstverständlich wird diese Maßnahme dann nicht ausgelöst, wenn der Abstand zum Hindernis zumindest nicht kleiner wird bzw. das Hindernis den Fahrkorridor verläßt.

Im Gegensatz zu den Sicherheitszonen können die Signalisierungszonen A und O in ihrem Abstand willkürlich vorwählbar sein. Damit kann dem Sicherheitswunsch des Fahrer Rechnung getragen werden. Will er möglichst frühzeitig auf eine Kollisionsgefahr hingewiesen werden, so hat er die Möglichkeit, den Abstand der Signalisierungszonen A und O größer als den Abstand der am weitesten vor dem Fahrzeug liegenden Sicherheitszone I zu wählen. Dieser Fall ist in Fig. 2 auf der linken Seite dargestellt. Die Signalisierungszone, der Einfachheit halber ist in Fig. 2 lediglich die Signalisierungszone A gezeigt, besitzt einen größeren Abstand als die Sicherheitszone I. Noch bevor das Hindernis, hier als Kraftfahrzeug 3 dargestellt, in die Sicherheitszone I eindringt, erfolgt eine akustische Warnung.

Der Abstand der Signalisierungszone A ist willkürlich wählbar. Er kann beispielsweise auf den Wert v/2, d. h. bei einer Geschwindigkeit von 100 km/h auf 50 Meter eingestellt werden. Wird er auf einen kleineren Wert, beispielsweise v/4, d. h. bei einer Geschwindigkeit von 100 km/h auf 25 Meter eingestellt, so erfolgt die akustische Warnung erst nach Unterschreiten des für die Sicherheitszone I maßgeblichen Abstands. Sofern sich der Fahrer sicherheitsbewußt verhält und seinen Abstand der jeweiligen Sicherheitslage anpaßt, erhält er damit keine akustischen Warnungen.

Andererseits wird er mit der gewählten Einstellung von v/2 rechtzeitig, d. h. noch vor Erreichen der Sicherheitszone I auf eine bevorstehende und sich vergrößernde Kollisionsgefahr hingewiesen.

Im rechten Teil von Fig. 2 ist der Sachverhalt gegenüber dem im linken Teil dieser Figur dargestellten Fall verändert, als nunmehr eine Situation angenommen ist, bei der die Sicherheitszone I wesentlich größer ist. Es handelt sich dabei um den Fall eines Kraftfahrzeugs 1, das mit einer Geschwindigkeit von 100 km/h auf ein stehendes Hindernis 3 (v = 0 km/h) auffährt. Im Gegensatz dazu war bei der links abgebildeten Situation das Hindernis 3 ein mit derselben Geschwindigkeit von 100 km/h vorausfahrendes Kraftfahrzeug. Die Sicherheitszone I ist nunmehr entsprechend den äußeren, nicht im einzelnen dargestellten Bedingungen, wie Fahrbahnbeschaffenheit, Sichtverhältnisse und dergleichen zu 100 m angenommen. Nunmehr werden innerhalb der Sicherheitszone I Soll-Maßnahmen erwartet, mit denen die Kollisionsgefahr verringert wird. Diese Maßnahmen müssen entweder vom Fahrer vorgenommen werden oder werden selbsttätig vorgenommen, sofern der Fahrer dies unterläßt.

Es handelt sich wieder um die in den Stufen I', I'' und I''' bezeichneten Vorgaben bzw. Maßnahmen, von denen mit I' der Beginn der vorgesehenen und zugelassenen Reaktionszeit bezeichnet ist, in der der Fahrer auf die Kollisionsgefahr reagiert und in der das Kraftfahrzeug den mit w₁ bezeichneten Weg zurücklegt, sofern der Fahrer nicht auf das Hindernis reagiert. Bei Ablauf der Reaktionszeit, d. h. bei Erreichen der Sicherheitsteilzone I'', die sich im Abstand von 77 m vor dem Kraftfahrzeug befindet, wird, sofern der Fahrer dies bis dahin nicht getan hat, selbsttätig das Fahrwunschpedal in die Ausgangsstellung gebracht. Verringert sich der Abstand zum Hindernis weiter, d. h. legt das Kraftfahrzeug den Weg w₂ zurück, so wird bei Erreichen der Sicherheitsteilzone I''' im Abstand von 42 m vor dem Kraftfahrzeug selbsttätig der Bremseneingriff vorgenommen, sofern der Fahrer dies bis dahin nicht getan hat.

Die Auslösung einer akustischen Signalisierungsmaßnahme bei Erreichen des Abstands für die Signalisierungszone A erfolgt unabhängig von den Soll-Maßnahmen, die für die Sicherheitsteilzonen I' bis I''' gelten. Damit ergibt sich hier eine Warnstrategie, die selbsttätig abläuft, sofern der Fahrer nicht selbst die erforderlichen Soll-Maßnahmen ergreift. Akustische und ggf. optische Signalisierungen unterstützen die Arbeitsweise des Fahrers. Nur sie können in ihrer Wirksamkeit durch den Fahrer selbst beeinflußt werden.

## Patentansprüche

1. Verfahren zum Vermeiden von Kollisionen von Kraftfahrzeugen, bei dem das Ausgangssignal einer ein Hindernis erkennenden Abstandsmeßvorrichtung einer Auswertevorrichtung zugeführt wird, bei dem ferner der Meßbereich der Abstandsmeßvorrichtung in Sicherheitszonen eingeteilt wird, die sich in unterschiedlichem Abstand vom Kraftfahrzeug entfernt befinden und denen eine individuelle vorgegebene Reaktionsmaßnahme (Soll-Maßnahme) zugeordnet wird, bei dem ferner durch die Auswertevorrichtung selbsttätig die für die Sicherheitszone vorgesehene Soll-Maßnahme durchgeführt wird, wenn sich das Kraftfahrzeug in den jeweiligen Sicherheitszonen befindet und der Abstand zu einem Hindernis weiter verringert wird, und bei dem zusätzlich als Soll-Maßnahme eine Signalisierungsmaßnahme ausgeführt wird, wenn eine in ihrem Abstand vom Fahrzeug entsprechend der Fahrgeschwindigkeit variierbare Signalisierungszone erreicht wird, dadurch gekennzeichnet, daß der Abstand der Signalisierungszone zusätzlich willkürlich wählbar ist.

2. Verfahren nach Anspruch 1 dadurch gekennzeichnet daß die Signalisierungszone in zwei Teile aufgeteilt ist, von denen dem einen Teil eine optische und dem anderen Teil eine akustische Signalisierungsmaßnahme zugeordnet ist.

3. Verfahren nach Anspruch 2, dadurch gekennzeichnet, daß die optische Signalisierungsmaßnahme bei größerem Abstand an einem Hindernis ausgelöst wird, während die akustische Maßnahme erst beim kleineren Abstand wirksam wird.

## Claims

1. A method of avoiding motor vehicle collisions, wherein the output signal from a distance meter which recognises an obstacle is supplied to an evaluating device, wherein also the measuring range of the distance meter is divided into safety zones at varying distances from the vehicle and associated with an individually preset reaction step (set step), wherein also the evaluating device automatically takes the set step provided for the safety zone if the vehicle is in the respective safety zone and the distance from an obstacle is further reduced, and wherein also a set step in the form of a signalling step is taken if a signalling zone at a distance from the vehicle varying with the speed thereof is reached, characterised in that additionally the distance of the signalling zone can be selected as desired.

2. A method according to claim 1, characterised in that the signalling zone is divided into two parts, one part being associated with an optical signalling step and the other part being associated with an acoustic signaling step.

3. A method according to claim 2, characterised in that the optical signalling step is taken at a greater distance from an obstacle whereas the acoustic step becomes operative only at a smaller distance.

## Revendications

1. Procédé pour éviter des collisions entre les véhicules selon lequel,
le signal de sortie d'un dispositif de télémétrie reconnaissant un obstacle est appliqué à un dispositif d'exploitation,
il lui est en outre attribué la plage de mesure du dispositif de mesure de distance, subdivisée en zones de sécurité éloignées de la distance variable par rapport au véhicule et auxquelles est attribuée une mesure de réaction prédéterminée individuellement (mesure de consigne)
procédé selon lequel
• en outre le dispositif d'exploitation effectue automatiquement les mesures de consigne prévues pour la zone de sécurité si le véhicule se trouve dans la zone de sécurité et si la distance de l'obstacle continue de diminuer, et
• en plus de la mesure de consigne, on effectue une mesure de signalisation si on atteint une zone de signalisation variable en fonction de la vitesse du véhicule n'est pas atteinte dans sa distance par rapport au véhicule,
caractérisé en ce que
la distance de la zone de signalisation peut en outre être sélectionnée arbitrairement.

2. Procédé selon la revendication 1,
caractérisé en ce que
la zone de signalisation est subdivisée en deux parties dont l'une est prévue pour recevoir un moyen de signalisation optique et l'autre partie un moyen de signalisation acoustique.

3. Procédé selon la revendication 2,
caractérisé en ce que
la mesure de signalisation optique est déclenchée à une distance de l'obstacle plus grande alors que la signalisation acoustique n'agit que pour une distance plus petite.
